Europäisches Patentamt

European Patent Office

Office européen des brevets

(11) Publication number: **0 536 586 B1**

(19)

(12) **EUROPEAN PATENT SPECIFICATION**

(45) Date of publication of patent specification: **15.03.95**  (51) Int. Cl.⁶: **G01M 3/38**, F17C 13/02

(21) Application number: **92116217.8**

(22) Date of filing: **23.09.92**

(54) **Gas visualizing apparatus and gas visualizing method.**

(30) Priority: **08.10.91 JP 260114/91**
**08.10.91 JP 260113/91**

(43) Date of publication of application:
**14.04.93 Bulletin 93/15**

(45) Publication of the grant of the patent:
**15.03.95 Bulletin 95/11**

(84) Designated Contracting States:
**DE FR GB**

(56) References cited:
**GB-A- 1 442 195**
**US-A- 4 390 785**
**US-A- 4 555 627**
**US-A- 4 612 797**

(73) Proprietor: **OSAKA GAS CO., LTD.**
**1-2, Hiranomachi 4-chome**
**Chuo-ku**
**Osaka-shi**
**Osaka 541 (JP)**

(72) Inventor: **Sato, Tominori, c/o OSAKA GAS
CO., LTD.**
**1-2, 4-chome, Hirano-machi**
**Chuo-ku,**
**Osaka (JP)**

Inventor: **Kanagawa, Toshihide, c/o OSAKA
GAS CO., LTD.**
**1-2, 4-chome, Hirano-machi**
**Chuo-ku,**
**Osaka (JP)**
Inventor: **Sumida, Koichi, c/o OSAKA GAS
CO., LTD.**
**1-2, 4-chome, Hirano-machi**
**Chuo-ku,**
**Osaka (JP)**
Inventor: **Nishio, Takeshi, c/o OSAKA GAS
CO., LTD.**
**1-2, 4-chome, Hirano-machi**
**Chuo-ku,**
**Osaka (JP)**

(74) Representative: **Brommer, Hans Joachim,
Dr.-Ing. et al**
**Patentanwälte Dipl.-Ing. R. Lemcke**
**Dr.-Ing. H.J. Brommer,**
**Postfach 40 26**
**D-76025 Karlsruhe (DE)**

**Description**

BACKGROUND OF THE INVENTION

1. FIELD OF THE INVENTION

This invention relates to a gas visualizing apparatus and a gas visualizing method, and more particularly to a gas visualizing apparatus and method for detecting gas leakage from tanks or piping in industrial plants, from piping buried under or exposed from roads or the like, or outdoor or indoor piping for dwelling houses.

Such a gas visualizing apparatus and method may also be used for detecting gas leakage occurring during gastightness tests.

2. DESCRIPTION OF THE RELATED ART

Conventionally, in detecting gas leakage in industrial plants, gas leak conditions are grasped through a plurality of detectors arranged in a monitoring territory. According to this method, detection is limited to a point of leakage. In order to determine leak conditions for large areas in an industrial plant (i.e. an amount of gas leakage and a position of a specific leaking point in a tank or piping), for example, it is necessary to install gas leak detectors in numerous locations to grasp leak conditions.

On the other hand, proposals have been made (US-A-4 555 627), for monitoring such gas leakage, to emit an infrared beam to a particular gas leak monitoring territory, and determine gas leakage by referring to the state in which the infrared beam is absorbed by the leaking gas. In this case, however, since the beam used is collimated, it is necessary to cause the beam to scan the monitoring territory.

The Inventors have devised a gas visualizing apparatus in which an infrared beam is emitted in a two-dimensional manner by a light emitter to cover a relatively large gas leak monitoring territory. However, such an apparatus involves great power consumption to drive the light emitter. This apparatus has a further disadvantage of requiring a large and expensive high-power laser.

It is sufficient just to detect infrared radiation from a background in a gas leak monitoring territory, and visualize gas leak conditions in the form, for example, of a variable density image on a display unit such as a CRT. However, with an apparatus having an ordinary construction, a detection signal providing gas absorption information is weak relative to a background signal, resulting in an inadequate display made on the CRT. That is, depending on the weather or season, the image may be too bright or too dark under the influence of sunlight and the like. Thus, a good resolution of light and shade cannot be achieved to reflect a gas concentration to be detected. Presence of the gas cannot be determined clearly even if it is possible to an image, which includes infrared absorption information of gas leakage as a dark image signal, of the monitoring territory including its background.

This situation occurs also where infrared radiation from the background is detected as it is, as explained hereinbefore, and where an infrared emitter is operated to emit an infrared beam, and the infrared beam radiated or reflected from the background is detected and displayed.

SUMMARY OF THE INVENTION

An object of the present invention, therefore, is to provide a gas visualizing apparatus and method, which requires only a simple construction to obtain reliable image information relating to gas leak conditions including the background, thereby enabling monitoring of an extensive territory.

The above object is fulfilled, according to the present invention, by a gas visualizing apparatus comprising a planar infrared detecting device for detecting infrared light radiated or reflected from a background of a gas leak monitoring territory, a planar infrared emitting device for emitting a detection infrared beam in two-dimensional form toward the gas leak monitoring territory, the detection infrared beam having a wavelength absorbable by a gas to be detected, and a display device for displaying information relating to gas leakage as a two-dimensional visible image corresponding to the gas leak monitoring territory, wherein the planar infrared emitting device includes an irradiated area varying device for converging or diverging the detection infrared beam to vary an area of the gas leak monitoring territory, and the planar infrared detecting device includes a transmission bandwidth varying device for setting a band of the infrared light entering the planar infrared detecting device to a band substantially centering on the wavelength of the detection infrared beam, and varying a width of the band.

Further, the present invention provides a gas visualizing method which utilizes the above gas visualizing apparatus to visualize gas leak conditions in the gas leak monitoring territory and to display the gas leak conditions as a two-dimensional image on the display device.

The functions and effects of the present invention are as follows.

With the gas visualizing apparatus having the above construction, the planar infrared detecting device makes a two-dimensional detection, corresponding to the background, of infrared light traveling through the gas leak monitoring territory, whether the detection infrared beam is emitted or not. This detection information includes gas absorption information as well as background information. The gas absorption information is included in a wavelength signal of the detection infrared beam within a band absorbable by the detected gas. The background information is included in all of the wavelength signals detected.

This visualizing apparatus includes the irradiated area varying device and transmission bandwidth varying device to adjust a ratio between gas absorption information and background information in a suitable way for transfer to the display device.

That is, the transmission bandwidth varying device varies a transmission bandwidth of signals given to the detecting device. Naturally, this bandwidth includes the wavelength of the detection infrared beam. When the transmission bandwidth is varied, an amount of information relating to the background and detected by the detecting device is varied while an amount of information relating to gas absorption remains the same. Generally, a normalization process is carried out at the display side (to make constant a total amount of information processed at the display side). According to the present invention, the transmission bandwidth is varied even if the normalization process is carried out, to provide the display device with a visualized image having a proper ratio of the background information with respect to the gas absorption information.

An ordinary TV device has a gain adjusting unit. Display conditions may be optimized more reliably by varying the transmission bandwidth than by operating the gain adjusting unit in adjusting the signal-to-noise ratio of the visualized image.

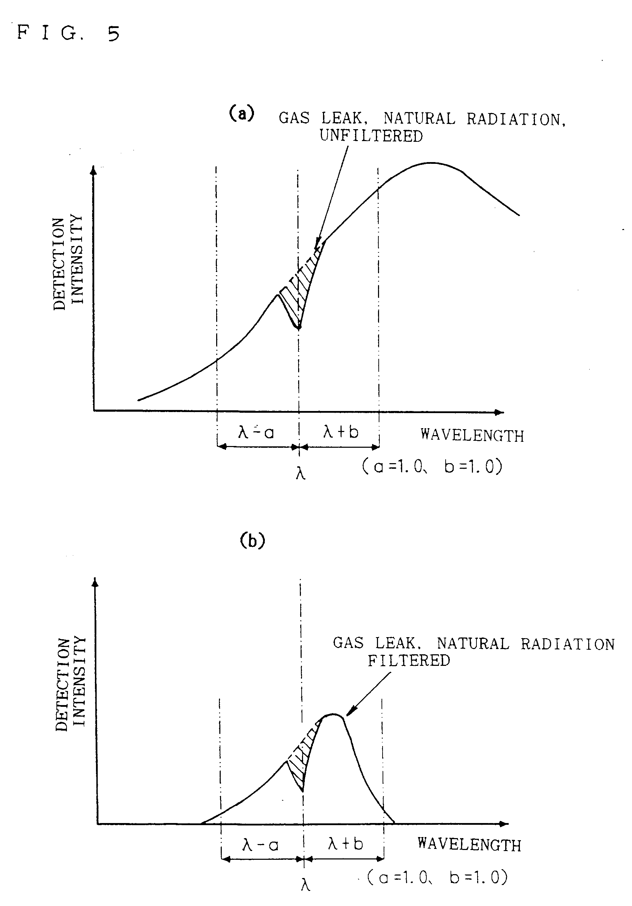

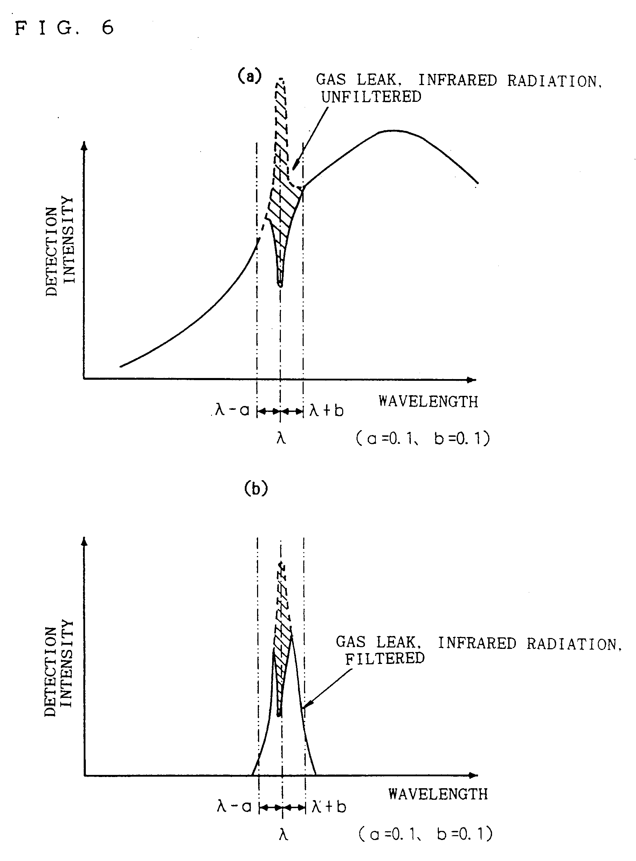

Figs. 5 and 6 show relations between detected wavelength and wavelength component in a condition of natural radiation and in a condition of infrared emission, respectively (in each figure, (a) shows the case of no transmission bandwidth adjustment, while (b) shows the case of limited transmission bandwidth, with the broken lines showing absence of gas leakage, and solid lines showing presence of gas leakage absorbing the infrared beam). The shaded portions of these figures represent ranges of absorption by the gas.

The transmission bandwidth varying device operates effectively whether the infrared emitting device is in operation or not. The irradiated area varying device operates effectively when the infrared emitting device is in operation. The irradiated area varying device varies an area of the territory irradiated by the detection infrared beam. Thus, where the detecting device monitors a fixed area, a variation in the area, by the same principle as noted above, results in a variation in the ratio of the background information with respect to the gas absorption information. The ratio made appropriate in this way is used to produce a visualized image.

Thus, when the detection infrared beam is emitted with a large angle of visibility covering a relatively large area, a relatively high concentration gas area is displayed on the display device. When the irradiated area varying device selects a certain area to be irradiated by the detection infrared beam, a relatively low gas concentration may also be displayed with good contrast. Fig. 7 shows limits of gas concentration detection in conditions of large area irradiation and small area irradiation.

This gas visualizing apparatus is capable of simultaneously handling the background information and gas absorption information for suitable display on the display device. This allows the apparatus to have a simple construction, with a very simple detection system.

Thus, the present invention provides a convenient and inexpensive gas visualizing apparatus. With the gas visualizing apparatus according to the present invention, a location of gas leakage may be identified instantly from a remote place. This enables causes of the leakage to be found out and safety measures to be taken promptly.

This gas visualizing apparatus may further include a monitor mode switching device for switching between a passive monitor mode in which only the planar infrared detecting device is operated to detect the infrared light radiated from the background of the gas leak monitoring territory, detection information thereby obtained being displayed on the display device as the information relating to gas leakage, and an active monitor mode in which the planar infrared emitting device and the planar infrared detecting device are operated, the detection information provided by the planar infrared detecting device being displayed on the display device as the information relating to gas leakage.

In the passive monitor mode, the planar infrared detecting device detects infrared radiation from the background of the gas leak monitoring territory (e.g. a gas-related installation such as a spherical gas holder, and natural objects such as plants and trees), to roughly grasp conditions of gas leakage. When danger is felt of the rough precision monitoring of the gas leakage, the mode switching device is operated to establish the active monitor mode to emit the detection infrared beam. Then, the gas leakage may be monitored with high precision based on intensity of the infrared beam reflected from the background. Such a gas visualizing apparatus enable gas leakage to be detected with high precision while prolonging life of a laser emitter acting as a light source and saving power consumption by the light source.

The larger area is covered, the greater output is required of the laser. According to the present invention, only a limited area is monitors by using the laser, a great laser output is not essential.

Further, the gas visualizing apparatus according to the present invention may include a reference planar infrared emitting device for emitting a reference infrared beam in two-dimensional form toward the gas leak monitoring territory, the reference infrared beam having a wavelength little absorbable by the gas to be detected, and a gas concentration operating device for obtaining reference absorption information from a ratio between emission intensity and reception intensity of the reference infrared beam, and absorption information from a ratio between emission intensity and reception intensity of the detection infrared beam, to obtain gas concentration information based on a difference between the absorption information and the reference absorption information, the gas concentration information being displaced on the display device as the information relating to gas leakage. This construction enables an accurate confirmation of a leaking gas concentration as well.

The foregoing and other objects, features and advantages of the invention will be apparent from the following more particular description of preferred embodiments of the invention, as illustrated in the accompanying drawings.

BRIEF DESCRIPTION OF THE DRAWINGS

Fig. 1 is a view showing a gas visualizing apparatus in use,
Fig. 2 is a view showing a construction of the gas visualizing apparatus,
Fig. 3 is a view showing conditions of a leaking gas varying with lapse of time as presented on a display unit,
Fig. 4 is a view showing an image in passive/active monitoring conditions, and a close-up image,
Fig. 5 is a view showing detection information in a condition of natural radiation,
Fig. 6 is a view showing detection information in a condition of infrared emission, and
Fig. 7 is an explanatory view showing a concentration detecting limit occurring with a variation in a territory of radiation.

DETAILED DESCRIPTION OF THE PREFERRED EMBODIMENTS

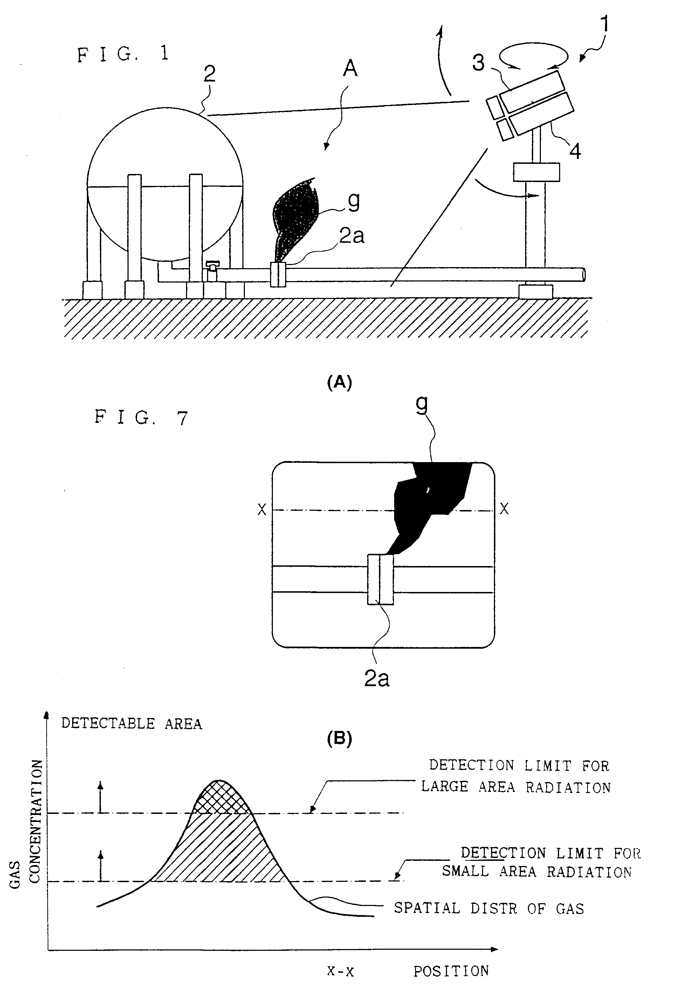

An embodiment of the present invention will be described with reference to the drawings. Fig. 1 shows a gas visualizing apparatus 1 of the present invention installed in a gas manufacturing plant to monitor gas leakage in a territory adjacent a spherical holder 2 (including a flange connection 2a of piping connected to the holder 2). That is, presence or absence of leakage of a combustible gas "g" which is an object of detection is monitored over an area, one example of gas leak monitoring territory A, having the spherical holder 2 as a background.

Selection of wavelength λ of an infrared beam used for detection (as a detection infrared beam), and a measurement principle employed in the gas visualizing apparatus 1 of the present invention will be described first. A particular infrared beam traveling through gases is absorbed by the combustible gas (i.e. gas "g" to be detected). This relationship is expressed by the following equation:

$$Io = Ii \times exp[- \alpha (\lambda) \times l \times c]$$ (Lambert-Beer's Equation)

where Ii and Io are intensities of incident tight and transmitted light, respectively,
$\alpha (\lambda)$ is an absorption coefficient determined by gas type and infrared wavelength,
l represents a length of interaction between infrared beam and gas, and c represents a gas concentration. Thus, when the gas "g" to be detected is present on an optical path, the infrared beam is absorbed by the gas to weaken its intensity. This may be detected two-dimensionally and displayed on a CRT two-dimensionally. The resulting two-dimensional variable density image shows a distribution of gas "g" in the gas leak monitoring territory.

The Inventors have investigated absorption characteristics of methane, propane and butane as gases "g" to be detected. It has been confirmed as a result that these gases have a common absorption wavelength in a 3 micrometer band.

Table 1 shows absorption coefficients of the respective gases experimentally obtained where an He-Ne laser (with an emission wavelength at 3.39 micrometers) is used as a light source.

Table 1

| Absorption Coefficients of Gases to be Detected | |
| --- | --- |
| gas | absorption coefficient-[atm-1cm-1] |
| methane | 9.0 |
| propane | 8.4 |
| n-butane | 12 |
| i-butane | 12 |

These results show that, by using an He-Ne laser as a light source, the construction noted above realizes visualization, based on use of infrared absorption, of methane, propane and butane at the same time. At liquefied natural gas terminals, for example, not only methane, but propane, butane and the like are used for carburation purpose. The fact that the same apparatus can monitor leakage of these gases provides a great advantage in terms of equipment cost.

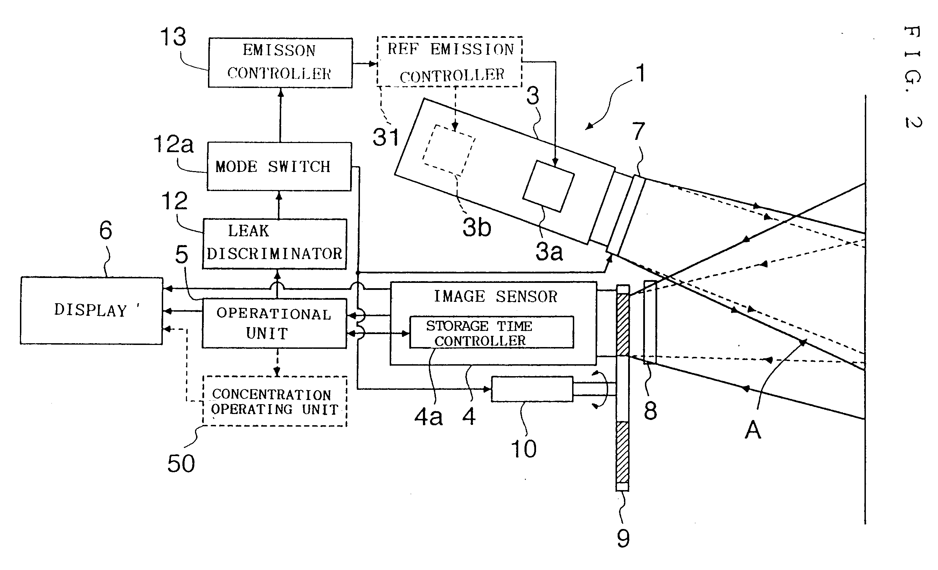

Details of the gas visualizing apparatus 1 according to the present invention will be described with reference to Fig. 2. The gas visualizing apparatus 1 includes an infrared laser 3 (with a laser source 3a) acting as a planar infrared emitting device, and an image sensor 4 acting as a planar infrared detecting device. The infrared laser 3 emits an infrared beam in two-dimensional form to the gas leak monitoring territory A. The infrared beam is of wavelength to be absorbed by the combustible gas "g" to be detected, such as methane, propane or butane. The image sensor 4 detects infrared beams radiated or reflected from the background and traveling through the gas leak monitoring territory A. The gas visualizing apparatus 1 further includes an operational unit 5 for processing detection information received from the image sensor 4, and a CRT 6 for displaying the processed information relating to gas leakage as a two-dimensional visible image.

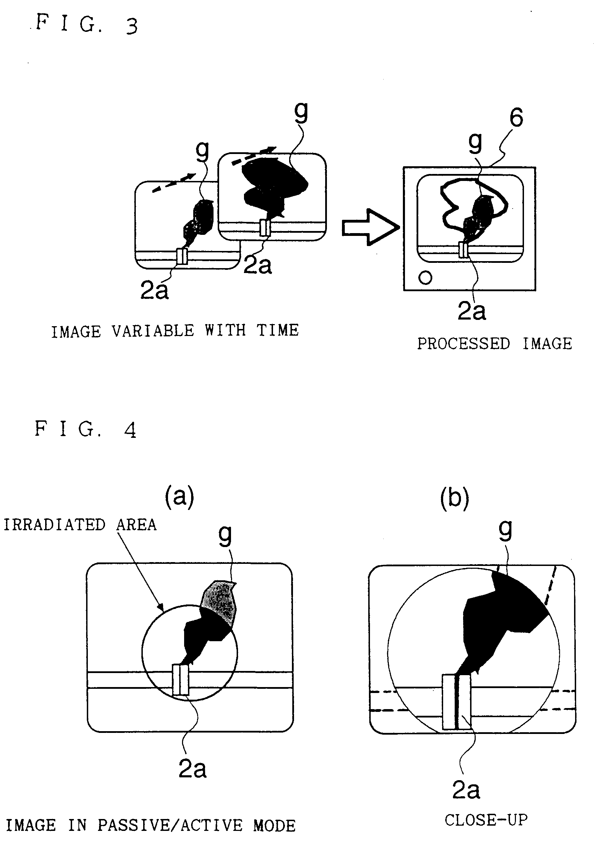

With this construction, the information detected by the image sensor 4 is processed, and displaced as information relating to gas leakage on the CRT 6 for observation by monitoring personnel. Fig. 3 shows displays made on the CRT 6.

The gas visualizing apparatus 1 according to the present invention is selectively operable in a passive monitor mode and an active monitor mode. In the passive monitor mode, only the image sensor 4 is operated to detect mainly infrared beams radiated from the background of the gas leak monitoring territory A, and detection information is displayed on the CRT 6 as the information relating to gas leakage. In the active monitor mode, the infrared laser 3 and image sensor 4 are operated and the resulting detection information is displayed on the CRT 6 as the information relating to gas leakage. Fig. 4 (a) shows a difference in the gas leak monitoring territory between the two modes. The gist of the above system lies in improvement in output of the infrared laser 3 and sensitivity of the image sensor 4. This is achieved by a beam expander 7 acting as an irradiated area varying device, a zoom mechanism 8 acting as a detected area varying device, and a transmission bandwidth varying device including band-pass filters 9 and a switching mechanism 10.

The respective components will be described successively hereinafter.

The image sensor 4 detects the infrared beams having passed through the gas leak monitoring territory A. These infrared beams may be those radiated from gas-related installations such as the spherical holder 2 and natural objects such as standing trees which constitute the background of the gas leak monitoring territory A, or the beam emitted from the infrared laser 3 for detection purposes and reflected from the background. The image sensor 4 further detects infrared intensity of a band including the wavelength of the infrared beam emitted from the infrared laser 3.

The image sensor 4 is used in both the passive monitor mode and active monitor mode. The image sensor 4 has the transmission bandwidth varying device including the plurality of band-pass filters 9 and switching mechanism 10, as well as the zoom mechanism 8, which are unique to the present invention. Fig. 4 (b) shows an image provided when the zoom mechanism 8 in operation.

When, in the passive monitor mode, the gas to be detected has a sufficient spectral band width of infrared absorption, the image sensor 4 can use, as light source, infrared radiation from the background objects by Planck's law of radiation. The band-pass filters 9 are arranged in front of the sensor 4 to obtain

5

an improved signal-to-noise ratio (or S/N ratio, in which S is an infrared intensity mainly representing a gas concentration, and N is a signal other than the infrared beam used for detection and mainly representing the background). Thus, a transmission bandwidth (half bandwidth) of transmission wavelengths entering the image sensor 4 through the band-pass filters 9 is selected so that a sufficient quantity of light is provided for the sensor 4 and a high S/N ratio for gas detection is assured. The selection and installation principle of the band-pass filters 9 will be described in greater detail hereunder.

Where a single band-pass filter 9 is used, the image displayed on the CRT 6 may be too bright or too dark, regardless of the passive or active monitor mode, under the influence of sunlight or the like. Further, even if an image is displayed on the CRT 6 with the same degree of brightness, contrast on the CRT screen may be too low relative to a gas concentration monitored. Thus, a problem that presence of the gas cannot be confirmed visually may arise even if an image appears on the CRT screen. To solve such a problem, the band-pass filter 9 should have a half bandwidth that provides a sufficient energy of heat radiating light from the background and reflected sunlight during the day in relation to the sensitivity of the image sensor 4, and assures a signal-to-noise ratio of the absorption by the detected gas. However, it is difficult to maintain this half bandwidth constant since sunlight energy is variable to a great extent. According to the present invention, in order to display an image on the CRT 6 with appropriate brightness and excellent contrast, the transmission bandwidth varying device is provided to change the band-pass filters 9 for varying the half bandwidth according to variations in sunlight and heat radiation from the background.

When the gas "g" leaks in a small quantity, the visualized image thereof may be small in size. Such a case requires a localized confirmation of the leakage to be made by a zooming operation. Conversely, in the event of leakage in a large quantity, localized monitoring is inadequate. To cope with this situation, the zoom mechanism 8 is disposed on a light-receiving side of the image sensor 4 to vary an angle of visibility for monitoring.

The storage time of the image sensor 4 is used in adjusting sensitivity of the sensor 4. Particularly when the transmission bandwidth is narrowed in order to improve the signal-to-noise ratio, the brightness on the screen may be insufficient due to a lack in the quantity of light detected by the sensor 4. In such a case, image brightness is secured by increasing the storage time without saturating screen brightness. This is done by a storage time controller 4a included in the image sensor 4.

The components taking part in the emission of the infrared beam for detection purposes will be described hereinafter. These components include the infrared laser 3 acting as a planar infrared emitting device, and the beam expander 7 acting as an irradiated area varying device.

The infrared laser 3 employed provides a wavelength agreeing with the wavelength to be absorbed by the detected gas "g". The laser output is selected such that the energy of the laser expanded for the monitoring territory A and reflected from the background is not less than a sum of the heat radiating energy of the background and the energy of sunlight of the day reflected from the background. Thus, a sufficient quantity of light is obtained from the infrared beam emitted for detection purposes during the daytime as well as nighttime.

The beam expander 7 is provided to vary a range of expansion of the laser to vary intensity of the reflected light per unit area in order to avoid a situation where the infrared beam emitted for detection purposes is relatively difficult to detect under excessive influences of the background and sun. The beam expander 7 normally is designed to form a collimated beam. However, the present system can operate with diffused light, and does not require a high degree of precision. Thus, an inexpensive beam expander may be used.

The infrared image sensor 4 has a monitoring range variable with distance. When the distance to the background is increased, the collimated light from the laser results in a reduced territory monitored on the screen in the active monitor mode, thereby impairing recognizability. For this reason, the expansion angle is variable within a range smaller than the angle of visibility of the image sensor 4. In the present system, the laser may provide multi-mode emission. Where the laser provides a wavelength of 3.39 micrometers, a multi-mode emission band is as narrow as 300 megaHz. This is included in an absorption band of methane. Thus, the laser beam obtained in the multi-mode emission may be used as it is after expanding it with the beam expander 7. It is therefore unnecessary to reduce to a single wavelength the laser beam obtained in the multi-mode emission and including numerous wavelengths as in the case of an ordinary laser emitter. This allows an increase in laser output. Further, a pulse laser may be used only if synchronized with response speed of the image sensor 4.

Formation of variable density images to be displayed on the CRT 6 will be described next.

In the presence of gas "g" in the gas leak monitoring territory A, the infrared beam emitted for detection purposes is absorbed as it travels forward (only in the active monitor mode) and backward. Since concentration of the gas "g" is different from location to location, differences in absorption rate result in spatial differences in density of the infrared beam (in different positions of a two-dimensional image). This light-reception information is displayed as a variable density image on the CRT 6. Thus, the image is information having a mixture of image information on the background of the gas leak monitoring territory A and image information on leak conditions of the detected gas "g".

The monitoring personnel are able to confirm visually through the display the background of the gas leak monitoring territory A and distribution of the gas "g". Generally, the background is stationary whereas the gas to be detected is in a state of flux. It is therefore possible to detect gas leakage automatically, by comparing image information obtained at one time and that obtained at another time.

The gas visualizing apparatus 1 of the present invention further includes a gas leak discriminator 12, a mode switcher 12a and an infrared emission controller 13. These devices 12 and 13 are linked to the operational unit 5, and constitute a detection information processing system.

The gas leak discriminator 12 has a processing system for checking presence or absence of gas leakage by comparing detection information obtained at different points of time. In a site such as this where gas monitoring is required, the background generally is stationary and the leaked gas "g" to be detected is in a state of flux. Thus, by comparing images of information obtained at different points of time, conditions of the gas leakage may be grasped. Fig. 3 shows such conditions (gas distributions occurring at different points of time are shown in superimposition).

The mode switcher 12a effects switching from the passive monitor mode to the active monitor mode when the gas leak discriminator 12 confirms gas leakage. At this time, the mode switcher 12a controls the infrared radiation controller 13 to drive the infrared laser 3. The mode switcher 12a simultaneously operates the switching mechanism 10 to vary the transmission band, and the beam expander 7 to reduce the radiated area, thereby to concentrate monitoring on a particular location of gas leakage.

A comparison is now made of the passive and active monitor modes. In the passive monitor mode, a band-pass filter 9 providing a band wider than a detection wavelength band is selected since background information forms a main part of a truly necessary infrared intensity signal detected by the image sensor 4. On the other hand, when the infrared beam of great energy emitted for detection purposes in the active monitor mode and reflected from the background is detected, the processing system normalized for expressing density variations in the passive monitor mode is incapable of discerning the density variations since the intensity signal having wavelengths near the detection wavelength is saturated at a certain level or above. The mode switcher 12b normally selects the band-pass filter 9 of wider band for a reduced signal-to-noise ratio. When the infrared laser 3 is driven, the mode switcher 12a is operable to drive the transmission band switching mechanism 10 for selecting a band-pass filter 9 of narrower band. This increases the signal-to-noise ratio for detailed observation of an extent of gas leakage. Figs. 5 and 6 show the changing of the transmission bands.

Specifications of the gas visualizing apparatus 1 described above are listed hereunder.

Infrared Laser 3

Type: helium-neon laser
Nominal output: 8mW
Central wavelength: 3.39 micrometers
Width of Band-pass Filters 9 a + b: 1 to 2 micrometers
(a and b are optional)

Examples of a + b

sunny day, active mode, object gas: methane
a + b: 0.1 to 0.2 micrometer
sunny day, passive mode, object gas: propane or butane
a + b: 1 micrometer
nighttime, passive mode, object gas: propane or butane
a + b: 2 micrometers
Angle of visibility: image sensor's angle of visibility
Distance to Background: several meters to several hundreds of meters

Image Sensor 4

Detection wavelength range: 3 to 4 micrometers

Max. detection temp. difference: 0.15oC or below (NETD)

Operation of the gas visualizing apparatus 1 will be described next.

(1) In the passive monitor mode, the image sensor 4 detects infrared radiation (radiant heat) from the background of the gas leak monitoring territory A, and the gas leak discriminator 12 determines presence or absence of gas leakage. In this state, the half bandwidth of the band-pass filters 9 is controlled to provide a quantity of light that enables confirmation of the background with a minimum brightness required for monitoring. At this time, a relatively wide transmission band is selected for the band-pass filters 9.

(2) In the event of gas leakage, the gas leak discriminator 12 determines presence of gas leakage with a two-dimensional shift of a region of absorption of infrared rays having a predetermined wavelength. This operation of the gas leak discriminator 12 utilizes a shift, with lapse of time, of the region where the infrared rays having the predetermined wavelength are absorbed.

(3) When the gas leak discriminator 12 determines, broadly, occurrence of gas leakage, the infrared radiation controller 12 drives the infrared laser 3 to emit an infrared beam toward the background. This enables determination, with high precision, of gas leakage based on the intensity of the ink beam reflected from the background.

At this time, the beam expander 7 and transmission band varying device 10 are adjusted to transmit an image signal with a high signal-to-noise ratio, thereby to provide reliable visualized information. The above embodiment may be modified as follows:

(a) In the described embodiment, the infrared laser 3 emits a single infrared beam for detection purposes. This infrared beam has a wavelength to be absorbed by the combustible gas "g". An additional emission system may be provided to emit a reference infrared beam having a wavelength not readily absorbed by the gas "g". (As shown in Fig. 2, this additional emission system includes a reference infrared emission controller 31 and a reference infrared laser source 3b, both marked in broken lines.) Then, gas concentration may also be detected, with the infrared beam of the wavelength not absorbed by the gas providing reference information, and pixel information based on the absorbable wavelength providing gas leak information. That is, the gas visualizing apparatus 1 further includes a gas concentration operating unit 50. Reference absorption information is derived from Lambert-Beer's equation based on the logarithm of a ratio between emission intensity and reception intensity of the reference infrared beam. Similarly, absorption information is derived based on the logarithm of a ratio between emission intensity and reception intensity of the infrared beam for gas detection. The gas concentration operating unit 50 provides gas concentration information based on a difference between the absorption information and the reference absorption information. The CRT 6 displays the gas concentration information as information relating to the gas leakage.

The infrared beam for detection and the infrared beam for reference may be emitted simultaneously from a single laser source including an organic pigment laser and a wavelength converting element. The wavelength converting element utilizes a non-linear effect to convert an emission wavelength of the laser to obtain a plurality of high-frequency waves. Two wavelengths selected from these high-frequency waves for use. In this case, the two band-pass filters disposed on the optical path may be switched with predetermined timing.

(b) The gas leak discriminator 12 may determine presence or absence of gas leakage by referring to the detection information provided by the image sensor 4 and from intensity of the infrared beam having the wavelength to be absorbed by the detected gas "g". That is, the image sensor 4 provides absorption information for each detection point on a two-dimensional area corresponding to the gas leak monitoring territory A, and the gas leak discriminator 12 determines that gas leakage has occurred when the absorption information indicates that a certain area has a gas concentration exceeding a predetermined threshold level.

(c) The background of the gas leak monitoring territory may include, in addition to the spherical holder 2, the ground, a concrete wall, a painted steel structure and the like. A screen may be provided in a certain type of territory.

(d) In the case of a large monitoring territory, a region irradiated by laser light may be shifted across the monitoring territory.

Although the laser emitter is used as the infrared emitting device in the foregoing embodiment, the light source is not limited to the laser emitter.

EP 0 536 586 B1

**Claims**

1. A gas visualizing apparatus comprising:

    planar infrared detecting means (4) for detecting infrared light radiated or reflected from a background of a gas leak monitoring territory (A);

    planar infrared emitting means (3) for emitting a detection infrared beam in two-dimensional form toward said gas leak monitoring territory, said detection infrared beam having a wavelength absorbable by a gas to be detected; and

    display means (6) for displaying information relating to gas leakage as a two-dimensional visible image corresponding to said gas leak monitoring territory;

    wherein said planar infrared emitting means includes irradiated area varying means (7) for converging or diverging said detection infrared beam to vary an area of said gas leak monitoring territory; and

    said planar infrared detecting means includes transmission bandwidth varying means (9, 10) for setting a band of said infrared light entering said planar infrared detecting means to a band substantially centering on the wavelength of said detection infrared beam, and varying a width of said band.

2. A gas visualizing apparatus as claimed in claim 1, wherein said planar infrared detecting means further includes detected area varying means (8).

3. A gas visualizing apparatus as claimed in claim 1, further comprising gas leak discriminating means for determining that gas leakage has occurred when detection information provided by said planar infrared detecting means includes a shift of a variable density portion from information obtained at one time to information obtained at another time.

4. A gas visualizing apparatus as claimed in claim 1, further comprising monitor mode switching means for switching between a passive monitor mode in which only said planar infrared detecting means is operated to detect the infrared light radiated from the background of said gas leak monitoring territory, detection information thereby obtained being displayed on said display means as the information relating to gas leakage, and an active monitor mode in which said planar infrared emitting means and said planar infrared detecting means are operated, the detection information provided by said planar infrared detecting means being displayed on said display means as the information relating to gas leakage.

5. A gas visualizing apparatus as claimed in claim 4, wherein further comprising gas leak discriminating means for determining occurrence of gas leakage based on the detection information provided by said planar infrared detecting means, said mode switching means being operable to select said passive monitor mode in a normal situation and to automatically switch to said active monitor mode when said gas leak discriminating means determines that gas leakage has occurred.

6. A gas visualizing apparatus as claimed in claim 4, wherein said transmission bandwidth varying means provides a narrow transmission band in said active monitor mode than in said passive monitor mode.

7. A gas visualizing apparatus as claimed in claim 1, further comprising
    reference planar infrared emitting means for emitting a reference infrared beam in two-dimensional form toward said gas leak monitoring territory, said reference infrared beam having a wavelength little absorbable by the gas to be detected, and gas concentration operating means for obtaining reference absorption information from a ratio between emission intensity and reception intensity of said reference infrared beam, and
    absorption information from a ratio between emission intensity and reception intensity of said detection infrared beam, to obtain gas concentration information based on a difference between said absorption information and said reference absorption information, said gas concentration information being displaced on said display means as the information relating to gas leakage.

8. A gas visualizing apparatus as claimed in claim 1, wherein said planar infrared emitting means provides such an output that, when said detection infrared beam is expanded to irradiate said gas leak monitoring territory, energy of said detection infrared beam reflected from said background at least

9

corresponds to a sum of energy radiated from said background and energy of sunlight in daytime.

9. A gas visualizing method utilizing the gas visualizing apparatus of claim 1 to visualize gas leak conditions in said gas leak monitoring territory and to display the gas leak conditions as a two-dimensional image on said display means.

**Patentansprüche**

1. Vorrichtung zur Sichtbarmachung von Gas, bestehend aus:
   planaren Infrarotermittlungsmitteln (4) zum Ermitteln eines Infrarotlichtes, das ausgesendet oder reflektiert wird von einem Hintergrund eines Gaslecküberwachungsgebietes (A);
   planaren Infrarotstrahlungsmitteln (3) zum Aussenden eines Ermittlungsinfrarotstrahls in zweidimensionaler Form in Richtung auf das genannte Gaslecküberwachungsgebiet, wobei der Ermittlungsinfrarotstrahl eine Wellenlänge aufweist, die durch ein zu ermittelndes Gas absorbierbar ist; und
   Anzeigemitteln (6) zum Anzeigen einer Information betreffend das Gasleck als ein zweidimensionales sichtbares Bild entsprechend dem Gaslecküberwachungsgebiet;
   wobei das besagte planare Infrarotstrahlungsmittel Bestrahlungsbereichsveränderungsmittel (7) beinhaltet zum Bündeln oder Zerstreuen des Ermittlungsinfrarotstrahls, um einen Bereich des Gaslecküberwachungsgebiets zu verändern; und
   das planare Infrarotermittlungsmittel Übertragungsbandbreitenveränderungsmittel (9, 10) beinhaltet um ein Band des Infrarotlichtes, das in das planare Infrarotermittlungsmittel eintritt, auf ein Band einzustellen, das sich im wesentlichen auf die Wellenlänge des Ermittlungsinfrarotstrahls zentriert, und um eine Breite des genannten Bandes zu verändern.

2. Vorrichtung zur Sichtbarmachung von Gas nach Anspruch 1, wobei das planare Infrarotermittlungsmittel außerdem Mittel (8) zur Veränderung des ermittelten Gebietes enthält.

3. Vorrichtung zur Sichtbarmachung von Gas nach Anspruch 1, die außerdem Gasleckunterscheidungsmittel (12) enthält, um festzustellen, daß ein Gasleck aufgetreten ist, wenn die Ermittlungsinformation, die durch das planare Infrarotermittlungsmittel (4) zur Verfügung gestellt worden ist, eine Verschiebung eines variablen Dichtigkeitsanteils der zu einer Zeit erhaltenen Information relativ zu der zu einer anderen Zeit erhaltenen Information enthält.

4. Vorrichtung zur Sichtbarmachung von Gas nach Anspruch 1, die außerdem ein Überwachungsmodusschaltmittel (12a, 12b) enthält zum Schalten zwischen einem passiven Überwachungsmodus, bei dem nur das planare Infrarotermittlungsmittel (4) betätigt wird, um das vom Hintergrund des Gasleckgebietes (A) abgestrahlte Infrarotlicht zu ermitteln, wobei die hierdurch erhaltene Ermittlungsinformation auf dem Anzeigemittel (6) als die Information betreffend das Gasleck angezeigt wird, und einem aktiven Überwachungsmodus, bei dem das planare Infrarotstrahlungsmittel (3) und das planare Infrarotermittlungsmittel (4) betätigt werden, wobei die Ermittlungsinformation, die durch das planare Infrarotermittlungsmittel (4) zur Verfügung gestellt wird, auf dem Anzeigemittel als die Information bezüglich des Gaslecks angezeigt wird.

5. Vorrichtung zur Sichtbarmachung von Gas nach Anspruch 4, die außerdem Gasleckunterscheidungsmittel (12) zum Feststellen des Auftretens eines Gaslecks aufweist, basierend auf der Ermittlungsinformation, die durch das planare Infrarotermittlungsmittel (4) zur Verfügung gestellt wird, wobei die Umschaltemittel betätigbar sind, um den genannten passiven Überwachungsmodus in einer normalen Situation auszuwählen und um automatisch in den aktiven Überwachungsmodus umzuschalten, wenn die Gasleckunterscheidungsmittel feststellen, daß ein Gasleck aufgetreten ist.

6. Vorrichtung zur Sichtbarmachung von Gas nach Anspruch 4, wobei das Übertragungsbandbreitenveränderungsmittel (9, 10) ein engeres Übertragungsband im aktiven Übertragungsmodus als im passiven Übertragungsmodus zur Verfügung stellt.

7. Vorrichtung zur Sichtbarmachung von Gas nach Anspruch 1, die außerdem ein planares Vergleichsinfrarotstrahlungsmittel (3b) zum Aussenden eines Vergleichsinfrarotstrahls in zweidimensionaler Form in Richtung auf das Gaslecküberwachungsgebiet (A) enthält, wobei der Vergleichsinfrarotstrahl eine Wellenlänge aufweist, die kaum durch das zu ermittelnde Gas absorbierbar ist, und Gaskonzentrationsbetätigungsmittel (50) zum Erhalt einer Vergleichsabsorptionsinformation aus einem Verhältnis zwischen Strahlungsintensität und Empfangsintensität des genannten Vergleichsinfrarotstrahls und eine Absorptionsinformation aus einem Verhältnis zwischen Strahlungsintensität und Empfangsintensität des Ermittlungsinfrarotstrahls, um Gaskonzentrationsinformation zu erhalten, basierend auf einem Unterschied zwischen der Absorptionsinformation und der Vergleichsabsorptionsinformation, wobei die Gaskonzentrationsinformation auf dem Anzeigemittel (6) als die Information bezüglich des Gaslecks angezeigt wird.

8. Vorrichtung zur Sichtbarmachung von Gas nach Anspruch 1, wobei das planare Infrarotstrahlungsmittel (3) eine solche Leistung zur Verfügung stellt, daß wenn der Ermittlungsinfrarotstrahl ausgedehnt ist, um das Gaslecküberwachungsgebiet (A) zu bestrahlen, die Energie des Ermittlungsinfrarotstrahls, der vom Hintergrund reflektiert wird, zumindest einer Summe von der vom Hintergrund abgestrahlten Energie und der Energie von Sonnenlicht am Tage entspricht.

9. Verfahren zur Sichtbarmachung von Gas, das die Vorrichtung zur Sichtbarmachung von Gas nach Anspruch 1 verwendet, um Gasleckbedingungen im Gaslecküberwachungsgebiet (A) zu visualisieren und die Gasleckbedingungen als ein zweidimensionales Bild auf dem Anzeigemittel (6) anzuzeigen.

**Revendications**

1. Dispositif de visualisation de gaz comprenant :
   un moyen de détection infra-rouge plan (4) pour détecter la lumière infra-rouge rayonnée ou réfléchie à partir d'un arrière-plan d'une zone de surveillance de fuite de gaz (A),
   un moyen d'émission infra-rouge plan (3) pour émettre un faisceau infra-rouge de détection sous forme bidimensionnelle vers ladite zone de surveillance de fuite de gaz, ledit faisceau infra-rouge de détection ayant une longueur d'onde absorbable par un gaz à détecter, et
   un moyen de visualisation (6) pour visualiser les informations se rapportant à la fuite de gaz sous forme d'une image visible bidimensionnelle correspondant à ladite zone de surveillance de fuite de gaz,
   dans lequel ledit moyen d'émission infra-rouge plan comporte un moyen faisant varier la région irradiée (7) pour faire converger ou faire diverger ledit faisceau infra-rouge de détection afin de faire varier une région de ladite zone de surveillance de fuite de gaz, et
   ledit moyen de détection infra-rouge plan comporte un moyen pour faire varier la largeur de bande de transmission (9, 10) pour régler une bande de lumière infra-rouge entrant dans le moyen détection infra-rouge plan à une bande se centrant pratiquement sur la longueur d'onde du faisceau infra-rouge de détection et faire varier la largeur de ladite bande.

2. Dispositif de visualisation de gaz, selon la revendication 1, dans lequel le moyen de détection infra-rouge plan comporte de plus un moyen faisant varier la région détectée (8).

3. Dispositif de visualisation de gaz selon la revendication 1, comprenant de plus un moyen de discrimination de fuite de gaz pour déterminer qu'une fuite de gaz s'est produite lorsque les informations de détection délivrées par ledit moyen de détection infra-rouge plan comportent un décalage d'une partie à densité variable entre des informations obtenues à un moment et des informations obtenues à un autre moment.

4. Dispositif de visualisation de gaz selon la revendication 1, comprenant de plus un moyen de commutation de mode de surveillance pour se commuter entre un mode surveillance passive dans lequel seul le moyen de détection infra-rouge plan est activé afin de détecter la lumière infra-rouge rayonnée à partir de l'arrière-plan de ladite zone de surveillance de fuite de gaz, les informations de détection obtenues de ce fait, étant visualisées sur ledit moyen de visualisation en tant qu'informations se rapportant à la fuite de gaz, et un mode surveillance active dans lequel le moyen d'émission infra-rouge plan et ledit moyen de détection infra-rouge plan sont activés, les informations de détection délivrées par ledit moyen de détection infra-rouge plan étant visualisées sur ledit moyen de visualisation en tant qu'informations se rapportant à la fuite de gaz.

5. Dispositif de visualisation de gaz selon la revendication 4, dans lequel le moyen de discrimination de fuite de gaz pour déterminer la présence d'une fuite de gaz basée sur les informations de détection délivrées par ledit moyen de détection infra-rouge plan, ledit moyen de commutation de mode étant actionnable pour sélectionner ledit mode surveillance passive dans une situation normale et pour se commuter automatiquement sur ledit mode surveillance active lorsque le moyen de discrimination de fuite de gaz détermine qu'une fuite de gaz s'est produite.

6. Dispositif de visualisation de gaz selon la revendication 4, dans lequel ledit moyen faisant varier la largeur de bande de transmission procure une bande de transmission plus étroite dans ledit mode surveillance active que celle du mode surveillance passive.

7. Dispositif de visualisation de gaz selon la revendication 1, comprenant de plus un moyen d'émission infra-rouge plan de référence pour émettre un faisceau infra-rouge de référence sous forme bidimensionnelle vers ladite zone de surveillance de fuite de gaz, ledit faisceau infra-rouge de référence présentant une longueur d'onde peu absorbable par le gaz qui doit être détecté et un moyen de calcul de concentration de gaz pour obtenir des informations d'absorption de référence à partir d'un rapport entre l'intensité de l'émission et l'intensité de la réception dudit faisceau infra-rouge de référence, et

les informations d'absorption à partir du rapport entre l'intensité de l'émission et l'intensité de la réception dudit faisceau infra-rouge de détection afin d'obtenir des informations de concentration sur la base de la différence entre lesdites informations d'absorption et lesdites informations d'absorption de référence, lesdits informations de concentration de gaz étant placées sur ledit moyen de visualisation en tant qu'informations se rapportant à la fuite de gaz.

8. Dispositif de visualisation de gaz, selon la revendication 1, dans lequel ledit moyen d'émission infra-rouge plan délivre une sortie telle que, lorsque ledit faisceau infra-rouge de détection est étendu pour irradier la zone de surveillance de fuite de gaz, l'énergie dudit faisceau infra-rouge de détection réfléchi par ledit arrière-plan, corresponde au moins à la somme de l'énergie rayonnée à partir dudit arrière-plan et de l'énergie du soleil pendant la journée.

9. Procédé de visualisation de gaz utilisant le dispositif de visualisation de gaz selon la revendication 1, afin de visualiser les conditions de fuites de gaz dans ladite zone de surveillance de fuite de gaz et pour visualiser les conditions de fuite de gaz sous forme d'image bidimensionnelle sur ledit moyen de visualisation.

EP 0 536 586 B1

FIG. 1

(A)

FIG. 7

(B)

13

FIG. 2

F I G. 3

IMAGE VARIABLE WITH TIME

PROCESSED IMAGE

F I G. 4

(a)

IRRADIATED AREA

g

2a

IMAGE IN PASSIVE/ACTIVE MODE

(b)

g

2a

CLOSE-UP

F I G. 5

**(a)** GAS LEAK, NATURAL RADIATION,
UNFILTERED

DETECTION INTENSITY

$\lambda - a$ | $\lambda + b$

WAVELENGTH

$\lambda$

$( a =1.0 、 b =1.0 )$

**(b)**

DETECTION INTENSITY

GAS LEAK, NATURAL RADIATION
FILTERED

$\lambda - a$ | $\lambda + b$

WAVELENGTH

$\lambda$

$( a =1.0 、 b =1.0 )$

16

FIG. 6

(a)

GAS LEAK, INFRARED RADIATION,
UNFILTERED

DETECTION
INTENSITY

WAVELENGTH

λ−a $\longleftrightarrow$ λ+b

λ          (a =0.1、 b =0.1)

(b)

DETECTION
INTENSITY

GAS LEAK, INFRARED RADIATION,
FILTERED

WAVELENGTH

λ−a $\longleftrightarrow$ λ+b

λ          (a =0.1、 b =0.1)

17